# EUROPEAN PATENT SPECIFICATION

(11) **EP 2 184 511 B1**
(45) Date of publication and mention of the grant of the patent: **24.08.2011**
(21) Application number: 09174098.5
(22) Date of filing: 27.10.2009
(51) Int. Cl.: F16H 7/08, F16H 7/12

(54) **Hydraulic auto-tensioner and belt transmission device**
Hydraulischer Selbstspanner und Riemenübertragungsvorrichtung
Tendeur automatique hydraulique et dispositif à transmission par courroie

(30) Priority: 05.11.2008 JP 2008284178
(43) Date of publication of application: 12.05.2010
(73) Proprietor: NTN Corporation, Osaka-shi, Osaka (JP)
(72) Inventor: Goto, Shiro c/o NTN Corporation., Iwata-shi (JP)
(74) Representative: Grünecker, Kinkeldey, Stockmair & Schwanhäusser Anwaltssozietät

(56) References cited:
- EP-A- 0 212 119
- EP-A- 1 710 472
- JP-A- 2005 265 039
- US-A- 4 986 796

## Description

### TECHNICAL FIELD

This invention relates to a hydraulic auto-tensioner to adjust tension of a belt for driving engine accessories such as a compressor of an air-conditioner and a water pump, and to a belt transmission device using the hydraulic auto-tensioner, according to preamble of claim 1.

### BACKGROUND ART

In an idling stop vehicle provided with a motor generator in which the motor generator is switched to power-generating mode so as to rotate the drive wheels by the engine and drive engine accessories such as the motor generator and the compressor of air-conditioner described above during normal running, and the engine is stopped and the motor generator is switched to actuating mode so as to drive engine accessories when the vehicle is at a stop, the engine is driven by the motor generator when restarting after idling stop.

In a belt transmission device having a belt for driving engine accessories such as mentioned above, a tension pulley is in contact with the belt at its slack side when the engine is driven, and an adjusting force of an auto-tensioner is applied to a pulley arm pivotably supporting the tension pulley so as to keep the tension of the belt constant.

The auto-tensioner described in Patent Document 1 is known as an above-mentioned auto-tensioner. This hydraulic auto-tensioner comprises a cylinder filled with hydraulic oil and formed with a sleeve fitting hole in the bottom face, a sleeve having its bottom end press-fit in the sleeve fitting hole, a rod having its lower portion axially slidably inserted in the sleeve so as to define a pressure chamber in the sleeve, and a return spring provided between a spring seat provided on the upper portion of the rod and the bottom face of the cylinder so as to bias the rod and the cylinder in extending direction.

This hydraulic auto-tensioner further comprises an elastic bellows with both ends fit on the outer circumferences of the spring seat and the upper portion of the cylinder, respectively, so as to define a sealed reservoir chamber between the cylinder and the sleeve. A leak gap is defined between sliding surfaces of the sleeve and the rod through which the pressure chamber communicates with the reservoir chamber. A path is formed between press-fitting surfaces of the bottom end of the sleeve and the fitting hole so as to communicate the lower portion of the reservoir chamber with the pressure chamber. A check valve is provided to close the path when the pressing-in force is applied in the direction to retract the cylinder and the rod and the pressure in the pressure chamber exceeds the pressure in the reservoir chamber.

In a hydraulic auto-tensioner with such a configuration, when tension of the belt for driving engine accessories increases and the pushing-in force is applied from the belt through the tension pulley and the pulley arm, making the pressure in the pressure chamber exceed the pressure in the reservoir chamber, the check valve closes the path and hydraulic oil flows into the reservoir chamber through the leak gap, thereby making the cylinder and the rod retract to the position where load of the return spring becomes equal to the pushing-in force. At this time, the pushing-in force is buffered by hydraulic damping caused by viscous resistance of the hydraulic oil passing through the leak gap.

On the other hand, when the tension of the belt decreases and force is applied in the direction to expand the cylinder and the rod, hydraulic oil in the reservoir chamber flows into the pressure chamber through the path and the cylinder and the rod moves relatively to each other in extending direction, thereby absorbing slackness of the belt. This hydraulic auto-tensioner thus keeps the tension of the belt constant.
Patent Document: JP 2000-504395A

### DISCLOSURE OF THE INVENTION

### OBJECT OF THE INVENTION

If the above-mentioned hydraulic auto-tensioner is applied to a belt transmission device in an idling stop vehicle, when restarting the engine by a motor generator, the belt on the slack side during the engine operation is tensed, thereby momentarily applying large pressing-in force to the hydraulic auto-tensioner. In the above-mentioned hydraulic auto-tensioner, however, since the return spring is provided inside the cylinder, the return spring cannot bear large loads and a return spring that bears large loads cannot be used either. This causes excessive retraction of the cylinder and the rod and wide change of the position of the tension pulley. Consequently the entire belt slackens and slip occurs between the belt and the tension pulley, which may cause unstable start of the engine.

To prevent excessive retraction of the cylinder and the rod while using a return spring that cannot bear large loads, elongation of leak down time is one possible way. Leak down time is a time period required for the rod to move a predetermined distance when pressing-in force is applied to the rod, and varies according to size of the leak gap. As leak down time becomes long, viscous resistance of hydraulic oil passing through becomes large. This makes hydraulic dampening effect buffering the pushing-in force large, thereby reducing displacement of the cylinder and the rod in retracting direction.

However, if the leak down time is unnecessarily long, displacement of the cylinder and the rod in retracting direction becomes extremely slow relative to displacement in extending direction. In this state, the cylinder and the rod move relatively to each other in extending direction along with vibration of the belt, which causes excessive tension of the belt, i.e. pump-up, thereby deteriorating the durability of the belt.

The object of the present invention is to prevent excessive retraction of the cylinder and the rod by optimizing load of the return spring and leak down time.

### MEANS TO ACHIEVE THE OBJECT

To achieve the above-mentioned object, the hydraulic auto-tensioner of the present invention adopts a configuration comprising the features of claim 1.

When the return spring is provided outside the cylinder as mentioned above, the return spring can receive large loads when pushing-in force is applied in direction to retract the cylinder and the rod. Further, when the lower limit of leak down time is set to be not shorter than 0.65 s/mm, displacement of the cylinder and the rod in retracting direction can be kept sufficiently small, thereby preventing excessive retraction of the cylinder and the rod.

The upper limit of the leak down time is preferably set to be not longer than 10 s/mm. If the leak down time is longer than this, displacement of the cylinder and the rod in retracting direction becomes extremely slow compared to that in extending direction, thereby causing pump-up.

A steel sleeve may be inserted in the cylinder so that the leak gap is defined between the inner diameter face of the sleeve and the plunger. With this configuration, wear of the cylinder due to sliding of the plunger is prevented by the sleeve. This makes it possible to form the cylinder with an aluminum alloy to save weight. Also, since the sleeve is made of steel, the sleeve itself is less likely to become worn, and change of leak gap size is thereby reduced.

The above-mentioned hydraulic auto-tensioner can be applied to a belt transmission device for an idling stop vehicle in which the engine is stopped when the vehicle stops and restarted by a motor generator after idling stop.

With this configuration, the cylinder and the rod do not retract excessively even if a high belt tension momentarily acts on the hydraulic auto-tensioner when restarting the engine by a motor generator. This keeps change of the tension pulley position small, thus preventing slip on the belt. The engine can thus be started stably.

In the above-mentioned belt transmission device, the engine can be made compact if the outer diameter of the return spring of the hydraulic auto-tensioner is within the axial width of a boss mounted on a pivot shaft of the pulley arm.

The engine can further be made compact if the above-mentioned boss of the pulley arm is positioned so that a side face of the boss on the side remote from the engine is flush with a side edge of the belt on the side remote from the engine or located close to the engine block than is the side edge of the belt.

### EFFECT OF THE INVENTION

In the hydraulic auto-tensioner of the present invention, the return spring can bear large loads and the lower limit of leak down time is set to be not shorter than 0.65 s/mm. This keeps displacement of the cylinder and the rod in retracting direction sufficiently small, thereby preventing excessive retraction of the cylinder and the rod. The belt is therefore less likely to slacken and slip between the belt and the tension pulley is thereby reduced.

### BRIEF DESCRIPTION OF THE DRAWINGS

Fig. 1 is a front view of a belt transmission device adopting the hydraulic auto-tensioner of the present invention;
Fig. 2 is an enlarged front view of the hydraulic auto-tensioner and its periphery in the belt transmission device of Fig. 1;
Fig. 3 is a sectional view taken along the line III-III of Fig. 2;
Fig. 4 is a graph showing relationship between the leak down time and the displacement of the rod in pushing-in direction; and
Fig. 5 is a side view of the hydraulic auto-tensioner and its periphery in the belt transmission device of Fig. 2.

### BEST MODE FOR EMBODYING THE INVENTION

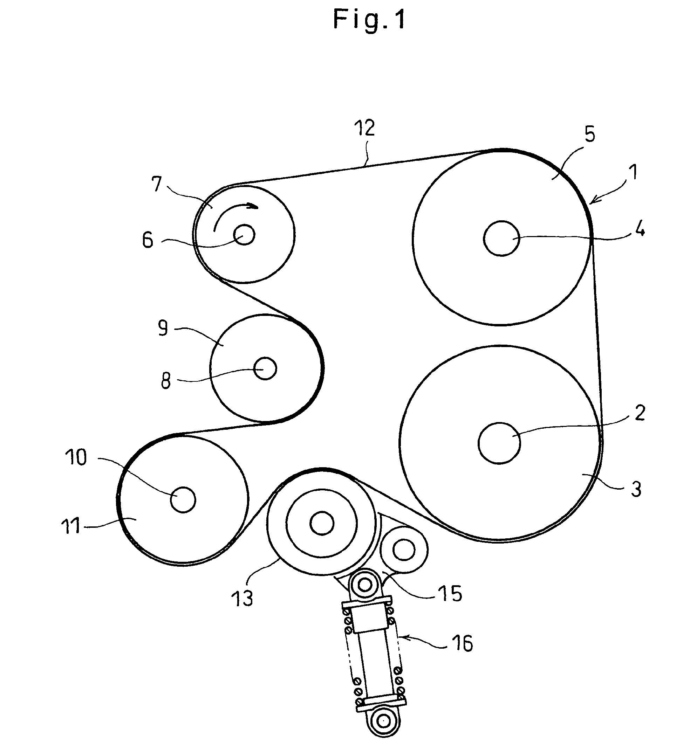

The embodiment of the present invention is now described with reference to the drawings. Fig. 1 shows a belt transmission device for an idling stop vehicle in which drive wheels are driven by an engine during normal running and the engine is stopped when the vehicle stops and restarted by a motor generator after idling stop.

In this belt transmission device 1, a belt 12 is trained around a pulley 3 attached to a crankshaft 2 of an engine, a pulley 5 attached to a rotation shaft 4 of a water pump, a pulley 7 attached to a rotation shaft 6 of a motor generator, an idler pulley 9 attached to a fixed shaft 8, and a pulley 11 attached to a rotation shaft 10 of a compressor of an air-conditioner. The motor generator is switched to a power generation mode by driving of the engine and, when the vehicle is stopped, the motor generator drives engine accessories such as the water pump and the air-conditioner.

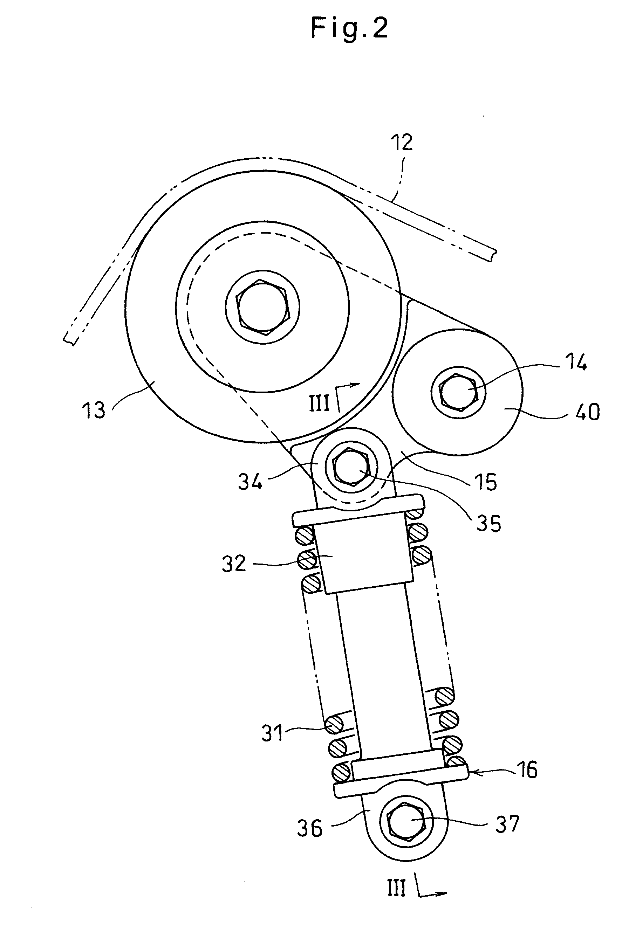

A tension pulley 13 is in contact with a portion of the belt 12 which becomes a slack side during driving of the engine. As shown in Fig. 2, the tension pulley 13 is rotatably supported by a pulley arm 15 which is pivotably supported around a pivot shaft 14. Adjusting force of a hydraulic auto-tensioner 16 embodying the present invention is applied to the pulley arm 15, which makes the tension pulley 13 pushed against the belt 12.

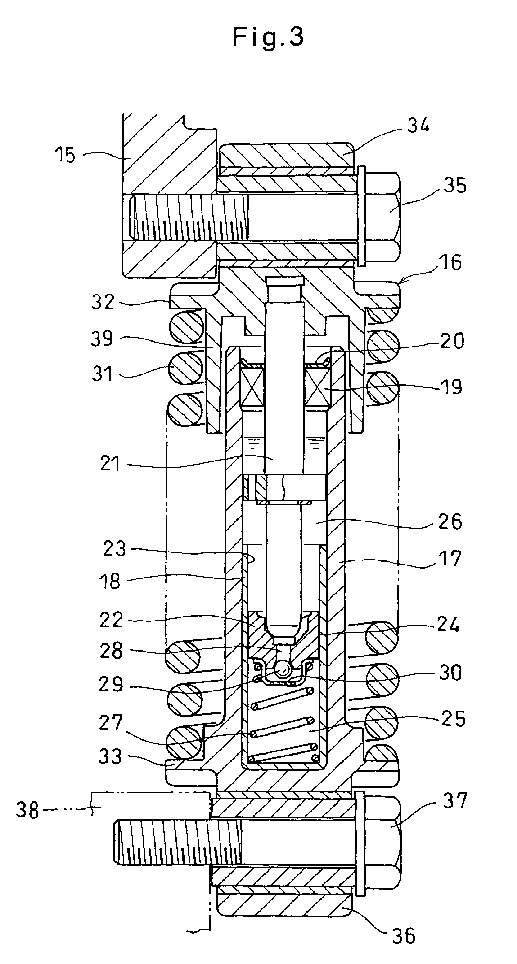

The hydraulic auto-tensioner 16 includes, as shown in Fig. 3, a cylindrical cylinder 17 with an open top end and a closed bottom end. The cylinder 17 is made of an aluminum alloy. Inside the cylinder 17, a steel cylindrical sleeve 18 having open and closed ends is mounted and fixed. Also hydraulic oil is filled in the cylinder 17. An oil seal 19 is mounted on the inner circumference of the cylinder 17 near its top end to prevent leakage of hydraulic oil. A rose snap ring 20 prevents the oil seal 19 from coming off.

A rod 21 is inserted in the cylinder 17, slidably extending through the rose snap ring 20 and the oil seal 19. A hydraulic damper is mounted in the rod 21, buffering pushing-in force applied to the rod 21.

At the bottom end of the rod 21, a plunger 22 is provided, fit in the sleeve 18 so as to be slidable along its inner diameter face 23. A minute leak gap 24 is formed between the plunger 22 and the inner diameter face 23 of the sleeve 18.

By the plunger 22 mounted in the sleeve 18, the inner space of the cylinder 17 is separated into a pressure chamber 25 and a reservoir chamber 26. In the pressure chamber 25, defined under the plunger 22, a plunger spring 27 is mounted, pressing the plunger 22 against the bottom end of the rod 21.

In the plunger 22, a path 28 is formed, communicating the pressure chamber 25 with the reservoir chamber 26. At the opening of the path 28 to the pressure chamber 25, a check valve is provided. The check valve comprises a check ball 29 that closes the path 28 when pushed-in force is applied to the rod 21 and the pressure in the pressure chamber 25 exceeds the pressure in the reservoir chamber 26, and a retainer 30 limiting axial movement range of the check ball 29. The retainer 30 is pressed against the bottom face of the plunger 22 by the elastic force of the plunger spring 27.

On the outside of the cylinder 17, a return spring 31 is mounted between a spring seat 32 mounted on the top end of the rod 21 protruding from the cylinder 17 and a flange 33 provided on the outer circumference of the cylinder 17 at its bottom end portion, biasing the cylinder 17 and the rod 21 in the extending direction. By being mounted on the outside of the cylinder 17, the return spring 31 can bear a large load.

A connecting portion 34 is formed integrally with the spring seat 32, pivotably connected to the pulley arm 15 through a bolt 35. Also, a connecting portion 36 is formed integrally with the bottom end of the cylinder 17, pivotably connected to an engine block 38 through a bolt 37. On the bottom face of the spring seat 32, a cylindrical dust cover 39 is integrally formed, covering the top opening of the cylinder 17.

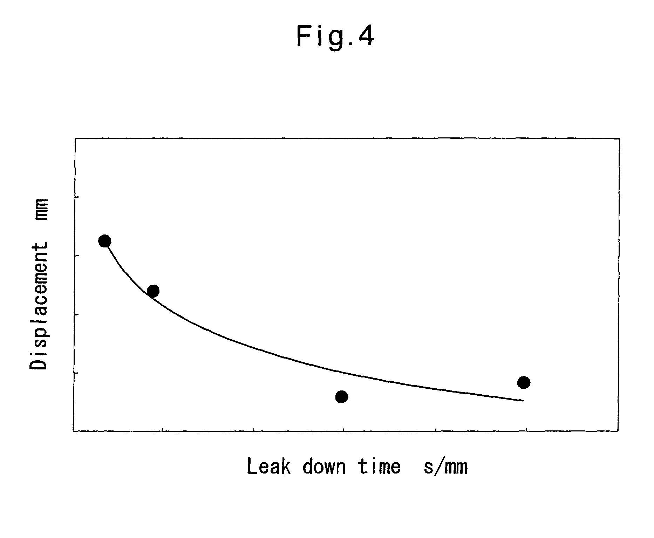

The size of the leak gap 24 between the plunger 22 and the inner diameter face 23 of the sleeve 18 is determined based on leak down time. Leak down time is a time required for the rod 21 to move a certain distance in the cylinder 17 when pushing-in force is applied to the rod 21. When leak down time becomes larger, viscous resistance of hydraulic oil passing the leak gap 24 become larger. This makes buffering action of the hydraulic damper larger and consequently makes displacement of the rod 21 in the pushed-in direction smaller as shown in Fig. 4.

If the leak down time is unnecessarily short, displacement of the rod 21 in the pushed-in direction becomes excessively large. In this state, when pushing-in force is applied to the rod 21, the position of the tension pulley 13 changes largely. This makes the entire belt 12 slacken and consequently a slip may occur between the belt 12 and the tension pulley 13. The lower limit of the leak down time is therefore determined to be not less than 0.65 s/mm so as to keep displacement of the rod 21 in the pushed-in direction small.

On the other hand, if the leak down time is unnecessarily long, moving speed of the rod 21 in the pushed-in direction becomes extremely slow relative to the moving speed in extending direction. In this state, the rod 21 protrudes due to vibration of the belt 12, which causes excessive tension of the belt 12, i.e. pump-up. The upper limit of the leak down time is therefore determined to be not more than 10 s/mm so as to prevent pump-up.

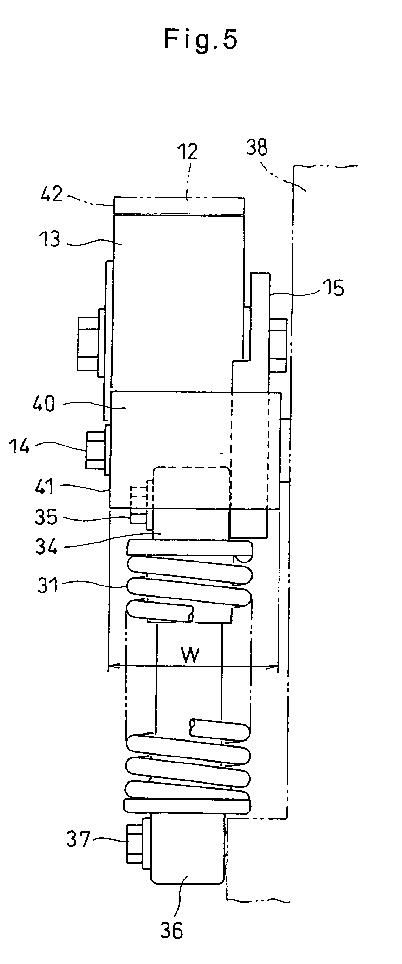

As shown in Fig. 5, the outer diameter of the return spring 31 is within the axial width W of a boss 40 provided on the pivot shaft 14 of the pulley arm 15. The boss 40 is positioned so that its side face 41 on the side remote from the engine block 38 is flush with the side edge 42 of the belt 12 on the side remote from the engine block 38, which makes the engine compact. Alternatively, the side face 41 of the boss 40 may be located close to the engine block 38 than is the side edge 42 of the belt 12.

In the belt transmission device 1 configured as described above, tension of the belt 12 varies according to factors such as loads of the engine accessories driven by the belt 12 and angular speed of the crankshaft during operation of the engine. When the belt 12 slackens, the rod 21 moves in the protruding direction from the cylinder 17 by pushing force of the return spring 31, thereby absorbing slackness of the belt 12.

At this time, since the plunger 22 moves in the same direction as the rod 21, the volume of the pressure chamber 25 becomes larger and thereby the pressure in the pressure chamber 25 decreases. When this pressure becomes lower than the pressure in the reservoir chamber 26, the check ball 29 moves downward and opens the path 28. Hydraulic oil in the reservoir chamber 26 thus flows through the path 28 into the pressure chamber 25, making the rod 21 and the plunger 22 move rapidly in protruding direction and thereby absorbing slackness of the belt 12.

On the other hand, when tension of the belt 12 increases, this tension of the belt 12 acts on the hydraulic auto-tensioner 16 through the tension pulley 13 and the pulley arm 15. At this time, tension of the belt 12 is applied to the rod 21 as pushing-in force and the pressure in the pressure chamber 25 becomes higher than the pressure in the reservoir chamber 26. This makes the check ball 29 move upward and thereby close the path 28.

When pushing-in force becomes larger than the load of the return spring 31, hydraulic oil in the pressure chamber 25 flows into the reservoir chamber 26 through the leak gap 24 formed between the sliding surfaces of the sleeve 18 and the plunger 22. At this time, the pushing-force is buffered by hydraulic damping caused by viscous resistance of hydraulic oil passing through the leak gap 24. The rod moves slowly to the position where the pushing-in force is equal to the load of the return spring 31, thereby keeping tension of the belt 12 constant.

On the other hand, when restarting the engine after idle stop, excessive belt tension momentarily acts on the hydraulic auto-tensioner 16 since the engine is driven by the motor generator. This makes the position of the tension pulley 13 change largely and consequently causes slackening of the entire belt 12. In this state, a slip may occur between the belt 12 and the tension pulley 13, thereby causing unstable start of the engine.

In the present invention, however, the return spring 31 can bear a large load and leak down time is set to be in the range of 0.65 s/mm to 10 s/mm. This keeps displacement of the rod 21 in the pushing-in direction sufficiently small, thereby keeping change of the position of the tension pulley 13 small. The belt 12 is therefore less likely to slacken and restart of the engine by the motor generator is stable.

In the belt transmission device 1, displacement of the rod 21 in the pushed-in direction is kept small by setting the lower limit of the leak down time to be not shorter than 0.65 s/mm. Load of the return spring 31 thus does not have to be unnecessarily large. This prevents tension of the belt 12 from becoming excessively high when driving the engine.

While, in the above-mentioned embodiment, the leak gap 24 is formed between the plunger 22 and the inner diameter face 23 of the sleeve 18, the leak gap may be formed between the plunger 22 and the inner diameter face of the cylinder 17 without providing the sleeve 18.

## Claims

1. A hydraulic auto-tensioner used to adjust tension of a belt (12) for driving engine accessories in an idling stop vehicle of which an engine is adapted to be stopped when the vehicle stops, the hydraulic auto-tensioner comprising
a cylinder (17) containing hydraulic oil therein,
a rod (21) inserted in said cylinder (17),
a plunger (22) provided at the bottom end of said rod (21),
said plunger (22) being slidably fit in the inner diameter face of said cylinder (17), defining a leak gap (24) therebetween,
said plunger (22) defining a pressure chamber (25) therebelow and a reservoir chamber (26) thereabove,
said plunger (22) being formed with a path (28) through which said pressure chamber (25) communicates with said reservoir chamber (26), said path (28) being provided with a check valve that closes said path (28) when the pressure in said pressure chamber (25) exceeds the pressure in said reservoir chamber (26),
**characterized in that**
a return spring (31) is provided outside said cylinder (17) and biasing said cylinder (17) and said rod (21) in an extending direction, and
the leak down time of hydraulic oil through said leak gap (24) is set to be not shorter than 0.65 seconds/mm, and

2. The hydraulic auto-tensioner according to claim 1, wherein a steel sleeve (18) is inserted in said cylinder and wherein said leak gap (24) is defined between the inner diameter face (23) of said sleeve (18) and said plunger (22).

3. A belt transmission device for idling stop vehicle wherein the engine is adapted to be stopped when the vehicle stops, comprising a first pulley (3) mounted on an engine crankshaft (2),
a second pulley (7) mounted on a rotation shaft (6) of a motor generator,
a third pulley (5, 11) mounted on a rotational shaft of an engine accessory, a belt (12) trained around said first, second and third pulleys,
a tension pulley (13) kept in contact with said belt (12) at its slack side when driving said engine,
a pivotable pulley arm (15) supporting said tension pulley (13), and
a hydraulic auto-tensioner that can adjust tension of said belt (12) by applying adjusting force to the pulley arm (15), wherein the engine is adapted to be restarted by said motor generator after idling stop,
**characterized in that** said hydraulic auto-tensioner is the hydraulic auto-tensioner (16) according to claim 1 or 2.

4. The belt transmission device according to claim 3, wherein the outer diameter of said return spring (31) of said hydraulic auto-tensioner (16) is within the axial width (W) of a boss (40) mounted on a pivot shaft (14) of said pulley arm (15).

5. The belt transmission device according to claim 4, wherein said boss (40) of said pulley arm (15) is positioned so that a side face (41) of the boss (40) on the side remote from the engine (38) is flush with a side edge (42) of said belt (12) on the side remote from the engine or located close to the engine (38) than is the side edge (42) of the belt (12).

## Patentansprüche

1. Hydraulischer Selbstspanner, der dafür verwendet wird, die Spannung eines Riemens (12) für Antriebsmotorzubehörteile in einem Leerlaufanhaltefahrzeug, von dem ein Motor dafür ausgelegt ist anzuhalten, wenn das Fahrzeug anhält, anzupassen, wobei der hydraulische Selbstspanner umfasst:
einen Zylinder (17), in dem Hydrauliköl enthalten ist,
eine Stange (21), die in den Zylinder (17) eingeführt ist,
einen Kolben (22), der an dem unteren Ende der Stange (21) vorgesehen ist,
wobei der Kolben (22) gleitverschieblich in der Innendurchmesserfläche des Zylinders (17) unter Festlegung eines Leckagespaltes (24) zwischen beiden eingepasst ist,
wobei der Kolben (22) eine Druckkammer (25) darunter und eine Reservoirkammer (26) darüber festlegt,
wobei der Kolben (22) mit einem Weg (28) ausgebildet ist, durch den die Druckkammer (25) mit der Reservoirkammer (26) kommuniziert,
wobei der Weg (28) mit einem Rückschlagventil versehen ist, das den Weg (28) schließt, wenn der Druck in der Druckkammer (25) den Druck in der Reservoirkammer (26) übersteigt,
**dadurch gekennzeichnet, dass**
eine Rückstellfeder (31) außerhalb des Zylinders (17) vorgesehen ist und den Zylinder (17) und die Stange (21) in einer Erstreckungsrichtung vorspannt und
die Leckageausfallzeit des Hydrauliköls durch den Leckagespalt (24) derart gewählt ist,
dass sie nicht kürzer als 0,65 s/mm und nicht länger als 10s/mm ist.

2. Hydraulischer Selbstspanner nach Anspruch 1, wobei eine Stahlhülse (18) in den Zylinder eingeführt ist und wobei der Leckagespalt (24) zwischen der Innendurchmesserfläche (23) der Hülse (18) und dem Kolben (22) festgelegt ist.

3. Riemenübertragungsvorrichtung für ein Leerlaufanhaltefahrzeug, bei dem der Motor dafür ausgelegt ist anzuhalten, wenn das Fahrzeug anhält, umfassend:
eine erste Riemenscheibe (1), die an einer Motorkurbelwelle (2) montiert ist,
eine zweite Riemenscheibe (7), die an einer Drehwelle (6) eines Motorgenerators montiert ist,
eine dritte Riemenscheibe (5, 11), die an einer Drehwelle eines Motorzubehörteiles montiert ist,
einen Riemen (12), der um die ersten, zweiten und dritten Riemenscheiben geführt ist, eine Spannriemenscheibe (13), die bei Betrieb des Motors in Kontakt mit dem Riemen (12) an dessen Durchhangseite gehalten ist,
einen schwenkbaren Riemenscheibenarm (15), der die Spannriemenscheibe (13) stützt, und
einen hydraulischen Selbstspanner, der die Spannung des Riemens (12) mittels Ausüben einer Anpasskraft auf den Riemenscheibenarm (15) anpassen kann, wobei der Motor dafür ausgelegt ist, nach einem Leerlaufanhalten durch den Motorgenerator neugestartet zu werden,
**dadurch gekennzeichnet, dass** der hydraulische Selbstspanner der hydraulische Selbstspanner (16) nach Anspruch 1 oder 2 ist.

4. Riemenübertragungsvorrichtung nach Anspruch 3, wobei der Außendurchmesser der Rückstellfeder (31) des hydraulischen Selbstspanners (16) innerhalb der axialen Breite (W) eines Vorsprunges (40) ist, der an einer Schwenkwelle (14) des Riemenscheibenarmes (15) montiert ist.

5. Riemenübertragungsvorrichtung nach Anspruch 4, wobei der Vorsprung (40) des Riemenscheibenarmes (15) derart positioniert ist, dass eine Seitenfläche (41) des Vorsprunges (40) an der von dem Motor (38) abgelegenen Seite bündig zu einer Seitenkante (42) des Riemens (12) an der von dem Motor abgelegenen Seite oder mit Anordnung nahe an dem Motor (38) im Vergleich zu der Seitenkante (42) des Riemens (12) ist.

## Revendications

1. Tendeur automatique hydraulique utilisé pour régler la tension d'une courroie (12) pour entraîner des accessoires de moteur dans un véhicule à l'arrêt au ralenti dont un moteur est apte à être arrêté lorsque le véhicule s'arrête, le tendeur automatique hydraulique comprenant
un vérin (17) contenant de l'huile hydraulique à l'intérieur,
une tige (21) insérée dans ledit vérin (17),
un plongeur (22) réalisé à l'extrémité de fond de ladite tige (21), ledit plongeur (22) étant ajusté d'une manière coulissable dans une face de diamètre intérieur dudit vérin (17) en définissant un espace de fuite (24) entre ceux-ci,
ledit plongeur (22) définissant une chambre de pression (25) en dessous et une chambre de réservoir (26) au-dessus, ledit plongeur (22) présentant un chemin (28) par lequel ladite chambre de pression (25) communique avec ladite chambre de réservoir (26), ledit chemin (28) étant muni d'un clapet anti-retour qui ferme ledit chemin (28) lorsque la pression dans ladite chambre de pression (25) dépasse la pression dans ladite chambre de réservoir (26), **caractérisé en ce qu'**un ressort de rappel (31) est réalisé à l'extérieur dudit vérin (17) et sollicite ledit vérin (17) et ledit piston (21) dans une direction d'extension, et
un temps d'arrêt de fuite de l'huile hydraulique à travers ledit espace de fuite (24) est réglé pour ne pas être plus court que 0,65 seconde/mm et pour ne pas être plus long que 10 secondes/mm.

2. Tendeur automatique hydraulique selon la revendication 1, dans lequel un manchon d'acier (18) est inséré dans ledit vérin, et dans lequel l'espace de fuite (24) est défini entre la face de diamètre intérieure (23) dudit manchon (18) et ledit plongeur (22).

3. Dispositif de transmission par courroie pour un véhicule d'arrêt au ralenti, où le moteur est apte à être arrêté lorsque le véhicule s'arrête, comprenant une première poulie (3) montée sur un vilebrequin de moteur (2), une deuxième poulie (7) montée sur un arbre de rotation (6) d'un moteur générateur, une troisième poulie (5, 11) montée sur un arbre de rotation d'un accessoire de moteur, une courroie (12) entraînée autour desdites première, deuxième et troisième poulies, une poulie de tension (13) maintenue en contact avec ladite courroie (12) à son côté mou lors de l'entraînement dudit moteur,
un bras de poulie pivotant (15) supportant ladite poulie de tension (13), et un tendeur automatique hydraulique apte à ajuster la tension de ladite courroie (12) en appliquant une force d'ajustement au bras de poulie (15), où le moteur est apte à être redémarré par ledit moteur générateur après l'arrêt au ralenti, **caractérisé en ce que** ledit tendeur automatique hydraulique est le tendeur automatique hydraulique (16) selon la revendication 1 ou 2.

4. Dispositif de transmission par courroie selon la revendication 3, dans lequel le diamètre extérieur dudit ressort de rappel (31) dudit tendeur automatique hydraulique (16) est dans la largeur axiale (W) d'une bosse (40) montée sur un arbre de pivotement (14) dudit bras de poulie (15).

5. Dispositif de transmission par courroie selon la revendication 4, dans lequel ladite bosse (40) dudit bras de poulie (15) est positionnée de telle sorte qu'une face latérale (41) de la bosse (40) sur le côté éloigné du moteur (38) est en affleurement avec un bord latéral (42) de ladite courroie (12) sur le côté éloigné du moteur ou est situé plus près du moteur (38) que le bord latéral (42) de la courroie (12).
